# EUROPEAN PATENT APPLICATION

(11) **EP 2 633 755 A1**
(43) Date of publication of application: **04.09.2013**
(21) Application number: 12001433.7
(22) Date of filing: 02.03.2012
(51) Int. Cl.: A01N 1/02

(54) **Organ perfusion system**

(71) Applicant: Rodos BioTarget GmbH, 30625 Hannover (DE)
(72) Inventor: Schreiter, Thomas, Dr., 65549 Limburg (DE); Gieseler, Robert, Dr., 58791 Werdohl (DE); Marquitan, Guido, Dr., 45147 Essen (DE); Furch, Marcus, Dr., 69115 Heidelberg (DE); Canbay, Ali, Prof. Dr., 45136 Essen (DE)
(74) Representative: Schüssler, Andrea

(57) **Abstract**

The present invention provides an organ perfusion system that enables to maintain the anatomic and functional tissue integrity of organ explants and provides a possibility to investigate ongoing interactions within the organ. For example, in case of liver it enables to investigate interactions between nonparenchymal and parenchymal liver cells, and to analyze cell-specific effects of innovative treatments.
The system comprises a bowl (10) for supporting an explant, a vessel (11) for storing the perfusion medium reservoir, a pump drive (12) with two peristaltic heads (121,122) for the bidirectional transport of the perfusion medium, an aquarium pump (13) comprising an airstone (131) for measuring and controlling the oxygen concentration in said perfusion medium, and sampling means (141,142) for collecting the perfusion medium and for applying nutrients. The components are integrated in a closed circuit via circuit tubing for the provison of a constant flow rate, being supplied with nutrients and oxygen, to said explants for at least six hours.

## Description

### Field of the Invention

The present invention relates to a novel perfusion system for perfusing organ explants, i.e. transplantable organs or parts thereof, derived from patients, healthy organ donors or animal sources, wherein the system is characterized in that its components are integrated in a closed circuit *via* circuit tubing for the provision of a constant flow rate, being supplied with nutrients and oxygen, to said explants for at least six hours. This system therefore maintains the anatomic and functional tissue integrity of the explants during the perfusion for at least six hours, i.e. said system furnishes conditions during the perfusion of explants that enable an improved and prolonged preservation of the anatomic and functional tissue integrity in comparison with the systems as described in the prior art.

### Background of the invention

Machine perfusion is generally performed to maintain an organ's quality until transplantation and to minimize reperfusion damage (Monbaliu, D. & J. Brassil, curr. Opin. Organ Transplant., 2010, 15: 160-166). These often take place as *ex-vivo* perfusions for keeping the quality of the organs. Ex-vivo perfusions, however, are also useful for studying organ toxicities which are caused by drugs or for studying pathologies of the organs. These studies are mainly performed with organs/samples from animal sources like pig, sheep or rat (Groneberg, D. A. et al., Toxicol. Pathol., 2002, 30: 394-399; Grosse-Siestrup, C. et al., Toxicol. Pathol., 2002, 30: 749-754; Nagel, S. et al., Toxicol., Pathol., 2005, 33: 434-440; Thewes, S. et al., J. Med. Microbiol., 2007, 56: 266-270; Ali, A. M. et al., Exp. Physiol., 2000, 85: 469-478).

In mammals, drug metabolization and detoxification mainly occur within the liver and kidney. Hence, *in-vitro* and animal models have been established and have long been used for mimicking physiological and disease-like conditions in humans. However, data gathered from such models not always match the actual *in-vivo* situation (Olinga, P. et al., Toxicology In Vitro, 1997, 12: 77-100; Olinga, P. & G. M. M. Groothuis, 2001, Chapter 12. In: Molema G., Meijer D. K. F. (eds.). Drug targeting. Organ-specific strategies. Wiley Online Library). For example, despite their successful testing in such settings, >1,000 drugs are annually dropped or withdrawn due to adverse reactions. Hence, models that enable to reliably predict drug metabolization, pharmacodynamics, pharmacokinetics and pharmacogenomics - and that potentially embrace bioinformatic approaches - are a cornerstone of pharmaceutical development (Watkins, P. B. et al., Clin. Pharmacol. Ther., 2011, 89: 788-790; Liew, C. Y. et al., J. Comput. Aided Mol. Des., 2011, 25: 855-871), wherein *ex-vivo* or rather *in-vitro* models are preferable because of financial and ethical considerations (Cheng, F. et al., J. Theor. Biol., 2011, 290: 27-36). Several established *in-vitro* models employ primary human hepatocytes as well as isolated hepatic tissue to evaluate physiological, pathophysiological and pharmacological characteristics (Gebhardt, R. et al., Drug Metab. Rev., 2003, 35: 145-213; Gómez-Lechón, M. J. et al., Expert. Opin. Drug. Metab. Toxicol., 2008, 4: 837-854; Hewitt, N. J. et al., Xenobiotica, 2007, 37: 1196-1224). While hepatocytes are mostly grown in suspension or two-dimensionally, only few systems provide 3-D scaffolds enabling prolonged liver cell functionality (Gerlach, J. C., Cell Transplant., 2006, 15: S91-S103; Zeilinger, K. et al., Tissue Eng. Part C Methods, 2011, 17: 549-556; Balmert, S. C. et al., Int. J. Artif. Organs, 2011, 34: 410-421; Funatsu, K. et al., Art. Organs, 2001, 25: 194-200). Cell culture models proceed from the enzymatic digestion of human liver tissue to obtain singularized parenchymal and nonparenchymal cells, which can reorganize in mono- or co-culture within an *in-vitro* setting.

### Summary of the Invention

An object of the present invention is to provide a system that would enable to maintain the anatomic and functional tissue integrity of organ explants and would provide a possibility to investigate ongoing interactions within the organ. For example, in case of liver it should enable to investigate interactions between nonparenchymal [liver sinusoidal endothelial cells, cholangiocytes, hepatic stellate cells, Kupffer cells, dendritic cells, natural killer (NK) cells and natural killer T (NKT) cells] and parenchymal liver cells, and to analyze cell-specific effects of innovative treatments.

This object has been solved by the present invention by providing a perfusion system that preserves organ architecture and maintains the anatomic and functional tissue integrity during the perfusion of the explants for at least six hours. The present invention is therefore able to furnish conditions during the perfusion of explants that enable an improved and prolonged preservation of the anatomic and functional tissue integrity in comparison with the systems described in the prior art.

The present invention therefore provides a novel technology wherein the system is characterized in that its components are integrated in a closed circuit *via* circuit tubing for the provision of a constant flow rate, being supplied with nutrients and oxygen, to said explants for at least six hours.

### Brief Description of the Drawings

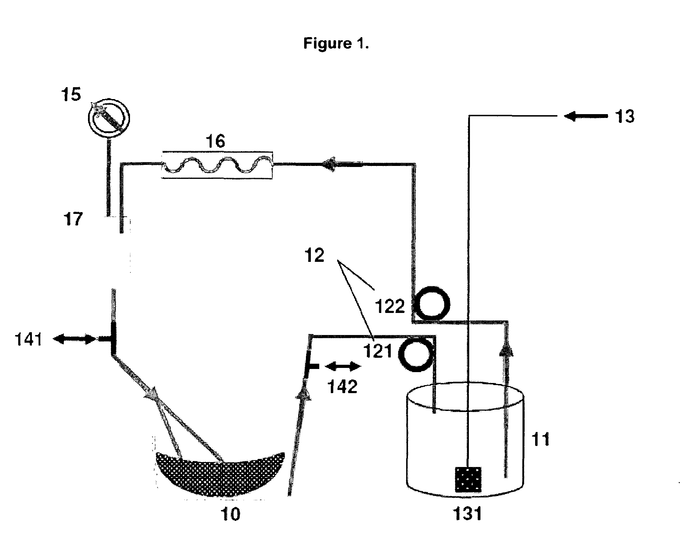

Fig. 1 is a schematic diagram of the organ perfusion system.

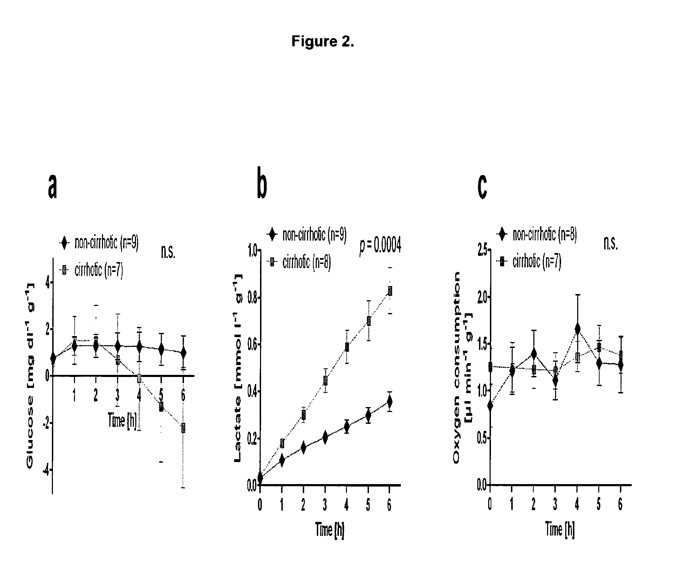

Fig. 2 shows the general hepatic metabolic parameters determined in the system of the present invention. Glucose **(a),** lactate **(b)** and oxygen **(c)** consumption in non-cirrhotic (n=9) and cirrhotic (n=8) liver specimens were determined in the perfusates. Values were normalized per gram of tissue and are displayed as means ± SEM. Missing data sets are due to mandatory maintenance of the device.

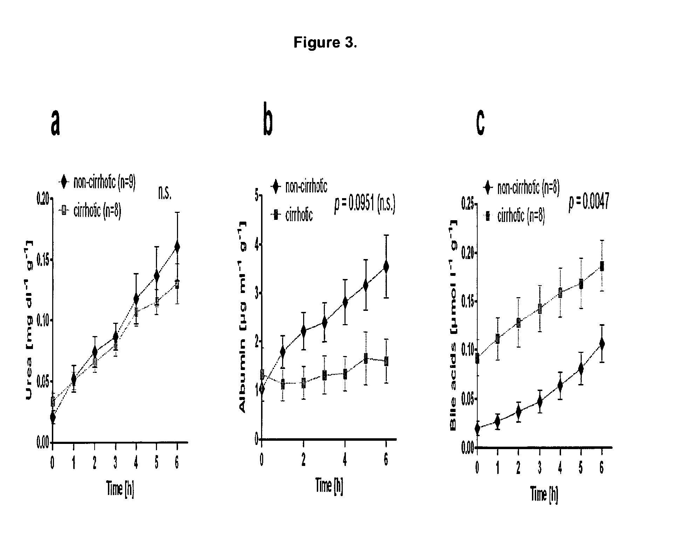

Fig. 3 shows the hepatic synthesis parameters determined in the system of the present invention. Production of urea **(a),** albumin **(b)** and bile acids **(c)** by non-cirrhotic (n=9) and cirrhotic liver (n=8) specimens were measured. Data were normalized per gram of tissue and are shown as means ± SEM. Grubb analysis identified the missing data set of bile acids as an outlier

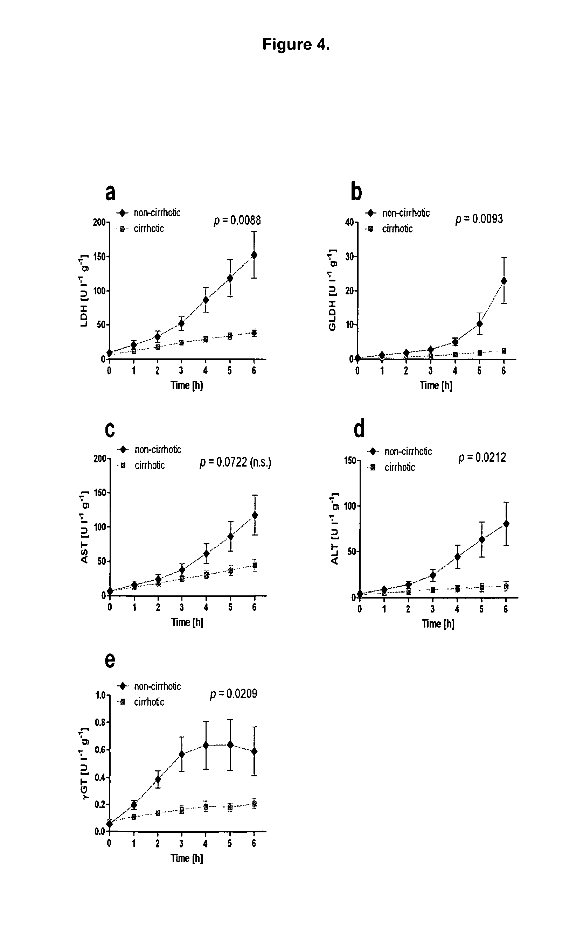

Fig. 4 shows the liver enzymes released during perfusion determined in the system of the present invention. Relative release of the cell integrity markers LDH **(a),** GLDH **(b),** AST **(c),** ALT **(d)** and γGT **(e)** by non-cirrhotic (n=9) and cirrhotic liver (n=8) specimens. Data were normalized per gram of tissue and are shown as means ± SEM.

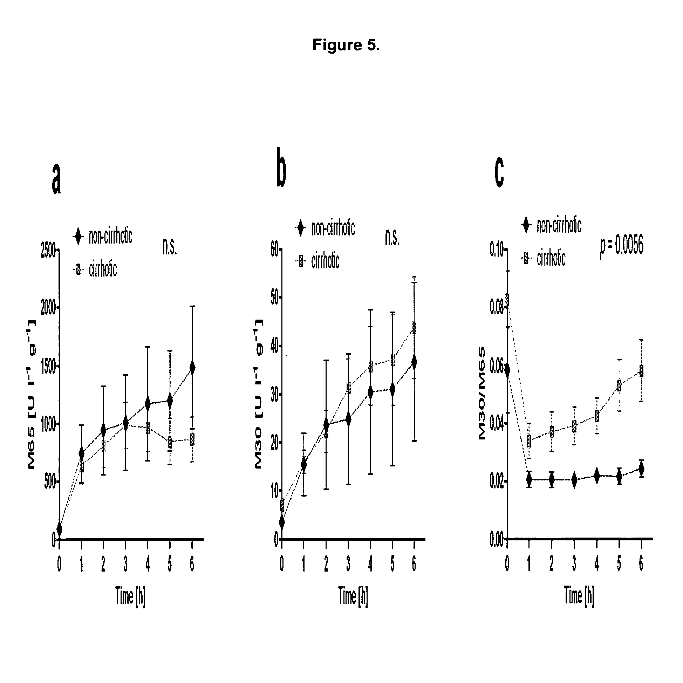

Fig. 5 shows cell-death parameters throughout tissue perfusion determined in the system of the present invention. Specifically dispayed are marker M65, indicating cell death by necrosis and apoptosis **(a),** marker M30, accounting for apoptosis **(b),** and the ratio between the M30 and M65 levels **(c).** Values were normalized per gram of tissue and are displayed as means ± SEM.

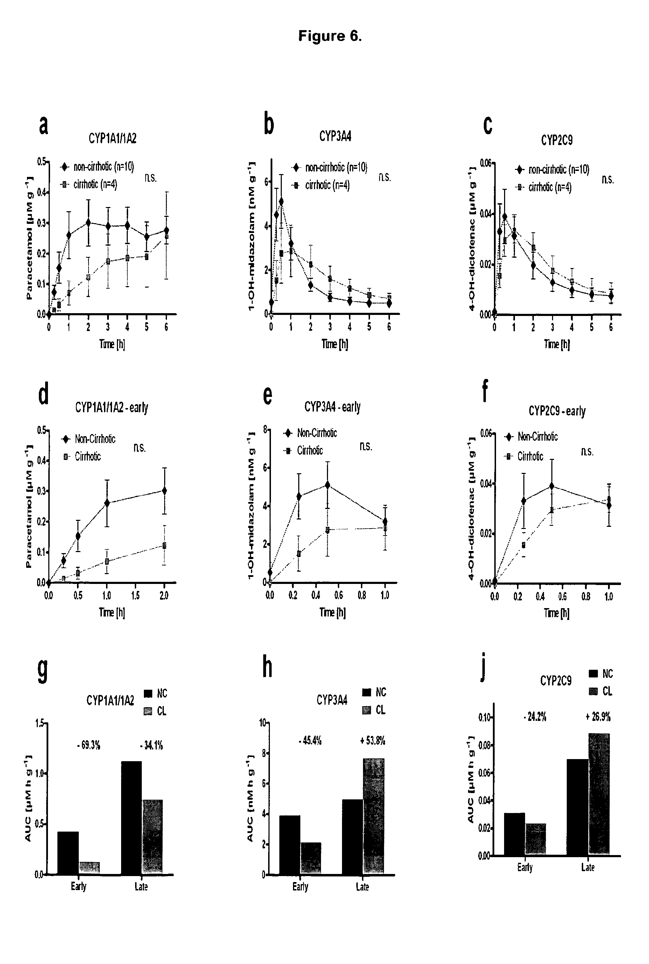

Fig. 6 shows the concentrations of cytochrome P450 (CYP) metabolites (phase-I products) in liver tissue perfusate determined in the system of the present invention. The activities of CYP1A1/1A2 **(a),** CYP3A4 **(b)** and CYP2C9 **(c)** were assessed by detection of the accordant metabolite concentrations after adding the respective model substrates to the perfusion medium. In order to better illustrate the short time periods during which phase-I reactions occurred, the respective curve sections are displayed separately **(d-f).** The corresponding areas under the curve, representing formation (early) and fade (late) of the respective phase I products, are shown as bar charts **(g-j).** Early vs. late time points were determined by intersection of the graphs, i.e., CYP1A1/1A2 (early = 0-2 h; late = 2-6 h); CYP3A4 and CYP2C9 (early = 0-1 h; late = 1-6 h).

### Detailed Description of the Invention and the Preferred Embodiments

The present invention is directed to a novel *ex-vivo* organ perfusion system. In a specific embodiment of the present invention, this system (1) is designed as a closed circuit via circuit tubing for the provision of a constant flow rate, being supplied with nutrients and oxygen, to the human organ explants for at least six hours, preferably at least 12 hours, most preferably about 18-24 hours.

Initial steps in the direction of more economic solutions for preserving organ fragments for their investigation were made almost 20 years ago by introducing the culture of precision-cut liver slices and were then developed further (Olinga, P. et al., Toxicology In Vitro, 1997, 12: 77-100; Olinga, P. & G. M. M. Groothuis, 2001, Chapter 12. In: Molema G., Meijer D. K. F. (eds.). Drug targeting. Organ-specific strategies. Wiley Online Library). In the absence of perfusion however, the tissue-resident cells are deprived of vital paracrine factors, which renders the results obtained with such settings questionable. In contrast, it can be anticipated that the introduction of an organ perfusion system that successfully preserves organ architecture and functionality will considerably enhance the quality and the transitory bench-to-bedside potency of research.

In principal, perfusion machines that are currently employed in a context of transplantation can also be used in investigative settings; however, this option is too costly for laboratory investigations, so that much more economic solutions are needed.

In its current as well as future improved versions thereof, the organ perfusion system (1) of the present invention is suitable to be employed for, e.g., therapeutically oriented as well as basic research on diseased and healthy explants so as to further the development of inventive therapeutic approaches to address major disease entities, as well as to further basic research on the physiology and pathophysiology of the organs in health and disease.

"Organ" means any transplantable organ of the human or animal (e.g. pig, chimpanzee, horse, dog) body. Examples are liver, kidney, small intestine, lung, spleen, pancreas and heart. "Organ" means the whole organ, specimen, part or segments thereof that maintain their anatomic and functional tissue integrity. "Organ" refers to a human or animal tissue specimen of any size and weight (e.g. 10-1500 g, preferably 50-500 g, most preferred 100-300 g) that can be reasonably used for basic and pharmacologic research purposes. In case of liver the weight of the whole organ is 1200-1800 g, in case of heart between 280-350g, in case of kidney between 150-200g and in case of lung 1000-1500 g. A "part thereof' is, thus. any piece therefrom so that a part of liver should have a higher weight and be larger than a part of heart or kidney to maintain the functional integrity. The term, "segment", refers to any of the separate anatomic entities of the human as defined by known anatomic classification or of analogous separate anatomic entities obtained from animal sources.

Applications of the present invention include, but are not limited, to the example of studying cellular interactions within the organ and to analyze cell-specific effects of innovative treatments.

The term "innovative treatment" includes, but is not limited to, treatments with novel active pharmaceutical ingredients, nucleic acids (e.g., siRNA species, or antisense or sense DNA species), immunomodulators (i.e., immunosuppressive agents, immunopotentiating or immunoregulatory agents), and lectins (such as virus-agglutinating agents). The term "innovative treatments" further comprises that such active compounds can be applied (i) in their free form, (ii) in encapsulated form within targeted or non-targeted drug delivery systems (such as nanocarriers in their diverse appearances), or (iii) in a form that is chemically linked to a targeting agent. Furthermore, the term "targeting" refers to the specific direction - such as by a molecular anchor structure with specificity for the target molecule(s) - of the respective compound to a certain single cell type, or to a group of cell types that is characterized by distinctive common molecular and/or functional features of its members.

In an embodiment of the present invention, the organ perfusion system (1) comprises a bowl (10) for supporting an organ explant; a vessel (11) for storing the perfusion medium reservoir; a drive propulsion device (12) for the bidirectional transport of the perfusion medium; an oxygen measuring probe for maintaining the required oxygen concentration (13) in said perfusion medium; and a sampling devices for collecting perfusion medium, and for applying nutrients (14).

In another embodiment of the present invention, said bowl (10) of said organ perfusion system (1) is a water bath maintaining the temperature between 33°C and 42°C, more preferably between 35.8 and 37.5°C, most preferably at about 37.0°C.

In a further embodiment of the present invention, said explant in said bowl (10) of said organ perfusion system (1) is connected via at least four branches of the circuit tubing that flow into venous catheters, wherein the perfusion medium efflux is collected in said bowl (10) and re-conveyed to the vessel (11).

In another embodiment of the present invention, said drive propulsion device (12) is a pump drive comprising at least two peristaltic heads (121,122).

In another embodiment of the present invention, said oxygen measuring probe (13) of said organ perfusion system (1) is a commercially available aquarium pump comprising an airstone (131) for measuring the oxygen concentration of said perfusion medium before said medium is introduced into said explant.

In a more specific embodiment of the present invention, said sampling devices (14) of said organ perfusion system (1) are three-way valves, which are installed before (141) and after (142) said perfusion medium passes said organ explants.

In a further embodiment of the present invention, said sampling device (141) of the organ perfusion system (1) is installed for collecting said perfusion medium before passing the organ and said sampling device (142) are installed for collecting the perfusion medium after passing the organ and for applying nutrients.

In one embodiment of the present invention, the organ perfusion system (1) further comprises sensing means for measuring and controlling the pressure (15) in said perfusion medium, wherein said sensing means (15) are a manometer, preferably located at or near the bubble trap, and said pressure ranges from 40 to 100 mm Hg. In another embodiment of the present invention, said sensing means (15) of the organ perfusion system (1) measure the pressure of said perfusion medium during the removal of macroscopic air bubbles from said perfusion medium.

A further embodiment of the present invention relates to the organ perfusion system (1), wherein said system (1) further comprises sensing means for measuring and controlling the temperature (16) of said perfusion medium, wherein said sensing means (16) keep the temperature of said perfusion medium between 33°C and 42°C, preferably between 35.8°C and 40°C, most preferably at 40°C. In another embodiment of the present invention, said sensing means (16) measure the temperature of said perfusion medium before said medium is introduced into said degassing means (17), wherein said sensing means (16) are a glass heating coil flowed with water.

In a more specific embodiment of the present invention, the organ perfusion system (1) further comprises degassing means (17) for removing air bubbles that interfere with said system (1), wherein said degassing means (17) remove the air bubbles before said medium is introduced into said organ or organ specimen, respectively.

Thus, in one embodiment of the present invention, the pump drive (12) with two peristaltic heads (121, 122) is used for the bidirectional transport of the perfusion medium. Initially, the perfusion medium is oxygenated by a commercially available aquarium pump (13) and routed through a custom-built glass heating coil (16) that is flushed with water kept at 40°C *via* an external heating outlet. At the same time the fluid's pressure is measured manometrically (15) and is to range from 40 to 100 mm Hg. Before entering the explant, air bubbles are removed from the perfusion medium by means of a bubble trap (17). A three-way valve is installed thereafter for collecting perfusion medium before passing the organ explant. The explant is connected via four branches of the circuit tubing, ending in venous catheters, and the perfusate efflux is collected in a bowl (10) and re-conveyed to the medium reservoir (11). This connection is furnished with another three-way valve for sampling after passage of the explant, and for applying any agents, targeted or non-targeted drug delivery systems loaded with agents, or agents linked to cell-targeting molecules, respectively. Human explants are maintained at 37°C in a water bath (10).

In the following paragraphs, the figures and the examples the invention is described in greater detail as a particular preferred embodiment in terms of an . The person skilled in the art, however, will recognize that all transplantable organs or parts thereof, e.g. kidney, heart, lung or small intestine, may be subjected to the perfusion system in a similar manner. The description of the perfusion system as a liver perfusion system shall not be construed as any limitation to said organ.

Particular applications of the present invention include the study of cellular interactions within the liver, wherein cellular interactions comprise interactions between nonparenchymal non-immune (liver sinusoidal endothelial cells, cholangiocytes, hepatic stellate cells) and immune cells (Kupffer cells, dendritic cells, NK and NKT cells) as well as parenchymal liver cells (i.e., hepatocytes).

In a particular preferred embodiment, the preserves the hepatic architecture when perfusing liver explants, such as liver specimens, liver segments, split liver transplants, or whole-organ liver transplants derived from patients, healthy organ donors or animal sources, which maintains the anatomic and functional tissue integrity during the perfusion of the human or animal liver explants for at least six hours. It is preferred that the liver explants have a weight of up to 1500-1800 g (whole liver) or any part/segment thereof (e.g. 10-1200 g).

Furthermore, another embodiment of the present invention relates to a method (i) of preserving human liver explants, (ii) of therapeutically oriented research or basic research on human liver explants derived from patients or healthy organ donors, (iii) of identifying differences between human liver explants derived from patients and healthy organ donors that most prominently pinpoint or characterize the infection status, pathophysiology, responsiveness to an innovative treatment, and/or safety of said innovative treatment by determining, if applicable, the clearance of, e.g., the relevant infectious agent (e.g., virus, bacterium, protozoon, etc.) in healthy vs. diseased liver tissue before and after treatment, the tissue's physiological capacity (e.g., by determining liver enzymes and functional parameters (e.g., hepatocellular synthetic potential and detoxifying potential), the immunological capacity (such as the induction, suppression or regulation of desirable or undesirable immune responses, respectively), and/or the integrity of the tissue (such as by measuring necrotic and apoptotic cell-death parameters), (iv) of pinpointing hitherto unidentified pathophysiological and/or immunopathological processes involved in the development and exacerbation of human liver diseases, or (v) of enhancing the quality of physiological, pathophysiological, immunological, immunopathological, pharmacodynamic, pharmacokinetic, pharmacogenomic and toxicological analyses on healthy and diseased human liver explants, by applying the organ perfusion system (1) of the present invention.

In detail, some embodiments of the present invention are directed to the organ perfusion system (1) for perfusing human or animal liver explants, such as liver specimens or liver segments that maintain their anatomic and functional tissue integrity during perfusion for a period of at least six hours. The term, "liver specimen", refers to a human or animal liver tissue specimen of any size and weight (e.g. 10-1500 g, preferably 50-500 g, most preferred 100-300 g) that can be reasonably used for basic and pharmacologic research purposes; the term, "liver segment", refers to any of the separate anatomic entities of the human liver as defined by Couinaud's classification (Rutkauskas, S. et al., Medicina (Kaunas), 2006, 42: 98-106) or of analogous separate anatomic entities of livers obtained from animal sources.

Some embodiments of the present invention are directed to the novel organ perfusion system (1) for perfusing human liver explants, such as split liver transplants or whole-organ liver transplants derived from healthy organ donors or animal sources under conditions allowing for the improved and prolonged preservation of anatomic and functional tissue integrity, i.e., for at least six hours. The term, "split liver transplant", refers to a functionally intact partial liver graft that is prepared as known to the surgical art from a complete functionally intact organ excised from a donor for the purpose of providing as many as possible different organ recipients with a split liver transplant that is able to regenerate by itself to a complete functional liver; this method was developed against the background of a steadily increasing need for organ transplants due to the lack of sufficient numbers of donor organs. The term, "whole-organ liver transplant", refers to the complete functionally intact organ excised from a donor as known to the surgical art for the purpose of providing one single recipient with the entire organ in case the method of split organ transplantation cannot be applied. Both split and whole-organ liver transplants are employed in context of life-saving organ transplantation (Broelsch, C. E. et al., Ann. Surg., 1990, 212: 368-375). In a specific embodiment of the present invention, the organ perfusion system (1) of the present invention is suitable to be employed for maintaining split or whole-organ liver transplants so as to enable to preserve such transplants prior to their implantation into recipients (i) under improved physiological conditions wherein "improved conditions" are defined as the maintenance of organ-specific parameters in ranges that more closely resemble the organ's physiological ranges than is enabled by current organ perfusion systems; and/or (ii) under economically more attractive conditions than are enabled by current organ perfusion systems; and/or (iii) for extended periods of time, i.e. for at least six hours, as are, for example, required because of long transportation routes. It is anticipated that the organ perfusion system (1) of the present invention will perform these vital and life-saving tasks at lower cost than currently available, and it thus is also anticipated that said system will by highly competitive in a health market whose ever-increasing economic requirements place increasing burdens on society.

The current invention presents an economic closed-circuit perfusion system that maintains human or animal explants between 10-1800 g weight structurally and functionally intact for at least six hours. In order to set the frame for enabling dependable predictions as to the functionality of healthy and diseased human liver explants, the performance of non-cirrhotic and cirrhotic specimens sampled from livers explanted in the course of orthotopic liver transplantation was compared. As a result, the employment of the organ perfusion system (1) of the present invention enhances the investigational and predictive power for human liver explants that are introduced and subsequently maintained under physiological or pathophysiological conditions, or under therapeutically modulated conditions provided by the novel perfusion system. In fact, the determined benchmark parameters (i.e., the standard clinical and research parameters for determining the functional and anatomic integrity of the human liver, such as liver enzymes, specific synthetic capabilities, and necrotic and apoptotic cell-death parameters) indicate that the organ perfusion system (1) of the present invention creates an environment that mimics the hepatic *in-vivo* situation as closely as possible. The present invention is thus most useful for both academic as well as pharmaceutical research and holds a strong economic advantage when compared to perfusion systems usually employed in a context of organ transplantation.

Some embodiments of the present invention are directed to methods of identifying characteristic differences between human liver explants derived from patients and healthy organ donors, wherein the differences are selected from the group consisting of parameters of general metabolic and specific synthetic hepatic capabilities, i.e. liver-specific parameters, liver enzymes and cell-death markers, as well as indicators of phase-I and phase-II transformations. Therefore, human liver specimens, such as samples of non-cirrhotic liver (NC; from patients with liver-metastasized neoplasms) and cirrhotic liver (CL; from patients with hepatitis C, primary bilary cirrhosis or ethanol toxicity) scrutinized with the organ perfusion system (1) of the present invention were functionally characterized for these differences. The term "general metabolic parameters" or rather "general metabolic capabilities and capacities" include glucose, lactate and O₂ or rather glucose metabolism, lactate production and oxygen consumption; "liver specific parameters" or rather "liver specific capabilities" include urea, albumin and bile acids or rather the production of urea, albumin and bile acids; "liver enzymes" include the release of parameters indicating liver-specific tissue damage, such as aspartate aminotransferase (AST), alanine aminotransferase (ALT), lactate dehydrogenase (LDH), glutamate dehydrogenase (GLDH), γ-glutamyl transferase (γGT); overall and apoptotic "cell-death markers" include markers indicating apoptotic and necrotic cellular demise, such as M65 vs. M30; "indicators of phase-I/phase-II transformations" include cytochrome P450 enzymes, cytochrome P450 (CYP) metabolites of phenacetin (CYP1A1/2), midazolam (CYP3A4) and diclofenac (CYP2C9), and metabolites of paracetamol, 1'-hydroxymidazolam and 4'-hydroxydiclofenac.

Using the organ perfusion system (1) of the present invention for, e.g., the perfusion of human liver explants, the liver-specific parameters, liver enzymes and cell-death markers, as well as indicators of phase-I and phase-II transformations of the human liver explants closely resemble physiological and pathophysiological characteristics of patients with NC (i.e., approximating the healthy state of the liver) and CL (i.e., paralleling the characteristic changes in liver physiology in different disease entities that lead to the cirrhotic alteration of the liver).

More specifically, significantly stronger lactate generation and bile acid production were seen in CL. Both factors are well known to be elevated in liver injury. Cirrhosis is associated with cell death and impaired liver function, leading to elevated lactate and bile acid concentrations, respectively (Purucker, E. et al., Am. J. Physiol. Renal Physiol., 2002, 283: F1282-F1289) In CL, glucose production, although increased within the first hours of perfusion compared to NC, later turned into glucose consumption while NC retained a rather constant production rate. Over time, common parameters of liver damage (AST, ALT, LDH, GLDH, γGT) clearly increased in NC in contrast to only being slightly elevated in CL. This latter finding corresponds well to the clinical situation, where chronic liver damage gradually exhausts cell numbers thus steadily diminishing the release of liver enzymes. This sharply contrasts with sudden intense damage of healthy livers, as in acute liver failure (Bechmann, L. P. et al., Liv. Int., 28: 713-716). It has been shown that high ALT and AST values are associated with better outcome of acute liver failure. The *ex-vivo* data obtained with the inventive system revealed a similar pattern. These and further findings summarized below suggest that the employment of this device to study and therapeutically modulate hepatological problems *ex vivo* may be of great relevance due to the increased reliability of results obtained with this system, which may be achieved at reduced expenditures when compared with earlier testing systems.

Furthermore, some embodiments of the present invention are directed to a method of pinpointing hitherto unidentified pathophysiological and/or immunopathological processes involved in the development and exacerbation of major liver diseases by applying said organ perfusion system (1) of the present invention. The term "major liver diseases" includes, but is not limited to, steatohepatitis, non-alcoholic fatty liver disease (NAFLD; i.e., the liver disease entity that develops at the most rapid pace within the countries of the western world as well as within those countries that have adapted a westernized life-style) (Ertle, J. et al., Int. J. Cancer, 128: 2436-2443) the viral hepatitides caused by the hepatitis B, C, and D viruses (HBV, HCV, HDV) (Geller, S. A., Clin. Liver. Dis., 2002, 6: 317-334) and hepatocellular carcinoma (HCC; i.e., the most abundant type of cancer of the liver that mostly develops as a result of HBV and/or HCV infection and/or as a result of NAFLD-associated liver fibrosis and cirrhosis) (Ertle, J. et al., Int. J. Cancer, 128: 2436-2443). Consequently, further embodiments of the present invention are directed to methods of identifying novel modes of treatment that may beneficially interfere with, or inhibit, pathophysiological and/or immunopathological processes involved in the pathology of the aforementioned or of other liver diseases that are to be identified by employing the inventive perfusion system or subsequent variants thereof by applying said organ perfusion system (1) of the present invention.

The before utilized technology was obviously limited by the availability of appropriate tissue samples, i.e., of accessible human liver explants, perfusion efficiency and supply of nutrients and oxygen to the liver cells. First, only few research groups have access to sufficiently large liver specimens from patients. Moreover, resections and transplantations may not always be planned ahead and the disposability of liver tissue to some extent depends on a quick response by the laboratory personnel. The same applies to samples utilized for isolating primary cells, which are needed for comparable systems (e.g., bioreactors) that employ primary hepatocytes. Second, perfusion never reached all cells within the tissue under the conditions employed. Trypan blue injection showed that, roughly, 50-80% of the tissue was reached. The fact that all data were normalized to the liver samples' weights and were consistent within the groups (NC vs. CL) with rather small standard deviations suggests that a roughly comparable fraction, proportional to the sample weight, was reached with the perfusate before. Finally, oxygenation of the perfusate and the supply with nutrients were not within optimal ranges - i.e., 50-60 μl min⁻¹ g⁻¹ oxygen consumption in vivo (Henryk Dancygier, Klinische Hepatologie. Springer 2003). When the liver samples of the present invention - i.e., the human liver explants - were perfused and characterized for a period of six hours, they showed a trend towards cell damage at the later points in time. However, based on this piloting perfusion system of the present invention it is anticipated that improved oxygen transport and/or delivery as well as a continuous supply of glucose and other nutrients will further prolong the survival time of perfused liver samples.

In a particular preferred embodiment, the perfusion system according to the present invention is designed as a closed circuit providing a constant flow rate, being supplied with nutrients and oxygen, to liver samples of 10-1500 g (for a schematic drawing, see Figure 1). A pump drive with two peristaltic heads is used for the bidirectional transport of the perfusion medium. Medium is oxygenated by a commercially available aquarium pump and routed through a custom-built glass heating coil flowed with water kept at about 40°C *via* an external heating outlet. The fluid's pressure is measured manometrically and ranges from 40 to 100 mm Hg. Before entering the liver sample, the perfusion fluid gets rid of air bubbles, e.g. by means of a bubble trap. A three-way valve is installed thereafter for collecting perfusion medium before passing the liver sample. The specimen is connected via four branches of the circuit tubing, ending in venous catheters, and the perfusate efflux is collected in a bowl and re-conveyed to the medium reservoir. This connection is furnished with another three-way valve for sampling after liver passage, and for applying any agents. Liver specimens are maintained at 37°C in a water bath.

In a preferred embodiment the experimental perfusion is performed as follows: First, the liver piece is connected to the perfusion circuit via 2-4 cannulas - dependent on available vessels - adhered into portal or central veins by a tissue adhesive. Second, the surgical cutting area is sealed. The liver piece is then rinsed with approx. 500 mL of Hank's balanced salt solution supplemented with 20 mM 4-(2-hydroxyethyl)-1-piperazineethanesulfonic acid (HEPES; PAA) and 2 U/mL heparin for removing residual blood, whereupon exchanging the perfusion medium to 250 mL Williams' medium E containing 20 mM HEPES. The first 50 mL volume of the perfusate is discarded for removing as much residual blood as possible and to allow for a consistent zero point. The circuit is closed by placing the effluent tubing into the medium reservoir (Figure 1). Time measurement starts after few initial samplings; flow rates are adjusted to obtain an appropriate pressure of about 50 mmHg (i.e., 40 or 50 mL/min). The perfusion is run for 6 h, and perfusate samples is collected hourly. For determination of CYP activity, additional samples are taken at 0.25 and 0.5 h. Glucose and lactate concentrations as well as pH and pO2 (general metabolism) are measured instantly on a blood gas analyzer and the pH is adjusted to 7.3-7.4 by adding 1-2 mL of 8.4% sodium bicarbonate solution to the perfusate as needed. When small (< 20 g) pieces of liver are employed, the initial pH turns often alkaline; in these cases 2-3 mM of sodium dihydrogen phosphate are added. In case the glucose concentration decreases below 40 mg/dL, the perfusate is supplemented with 0.75-1.0 mL of a 40% glucose solution corresponding to 150-200 mg/dL glucose. At termination of the experiment, 2 mL of trypan blue are added and perfuses for 10 min to allow for evaluation of perfusion efficiency and identification of the perfused tissue areas. Liver specimens are finally cut into 1-cm slices, and areas of interest are either stored in 4% paraformaldehyde for paraffin embedding or frozen in liquid nitrogen prior to preparing cryosections.

As shown by the inventors in the Examples, the rapid phase-I conversion of three human-relevant CYP substrates clearly proves that the hepatocytes of the perfused liver are functionally active and perform physiological detoxification reactions. The fast consumption of the phase-I metabolites of midazolam and diclofenac further indicates the hepatocytes' intact phase-II metabolism. Both biotransformation reactions are more pronounced in NC than in CL specimens. Subject to taking the low CL sample into account, these results illustrate the more dysfunctional state for hepatocytes in a cirrhotic environment. When CYP results from NC tissue are compared to a similar CYP testing setup on bioreactor-cultured primary human hepatocytes, the bioreactor cultures exhibits a more than two-fold slower phase-I formation and performs phase-II reactions to a much lower extent on these model substrates (Zeilinger, K. et al., Tissue Eng. Part C Methods, 2011: 17: 549-556, Mueller, D. et al., J Tissue Eng Regen Med., 2011, 5(8): e207-18).

The current systems for evaluating candidates for active pharmaceutical ingredients generally employ single-type cell cultures or animal models (Olinga, P. et al., Toxicology In Vitro, 1997, 12: 77-100; Gebhardt, R. et al., Drug Metab. Rev., 2003, 35: 145-213). While both of which continue to prove their value, they also have their limitations. Cell lines undoubtedly are altered variants of their healthy counterparts, and even humanized animal models have numerous drawbacks due to the species-related dissimilarities in (patho)physiology, infection modes, and/or pharmacological metabolization and toxicity. Such limitations may be considerably mitigated by employing a suitable system for perfusing human organs that can even mimic pathological conditions, as is enabled by the novel perfusion system. In this sense, a crucial advantage of the organ perfusion system (1) of the present invention is the presence of all cell species that are retained within an organ's native or pathologically altered scaffold and structure.

Finally, some embodiments of the present invention are directed to methods for continuously enhancing the organ perfusion system (1) of the present invention, such as by simplifying the handling, or rather improving the ease of handling, by optimizing the oxygen and nutrient supply, and by establishing a baseline characterization of specimens derived from different disease entities that is increasingly reliable. Further embodiments of the present invention are also directed to methods of adapting other inventive methodologies to the organ perfusion system (1) of the present invention so as to continuously enhance its informative power to predict organ-specific toxicities and real-life efficacies of investigative new drugs (INDs). As one powerful example that embraces a most recent novel approach, the organ perfusion system (1) of the present invention may be complemented with a cutting-edge multi-gene expression signature that excellently predicts organ toxicity, e.g. hepatotoxicity (Cheng, F. et al., J. Theor. Biol., 2011, 290: 27-36). The implementation of such an improved system is able to identify undesired or dangerous phase-I and/or phase-II metabolites of INDs. Importantly, such enhanced toxicity results as well as the identification of IND-specific efficacies can be compared and normalized without further exhausting the overstrained and indispensable transplant supply. This, again, may positively reflect upon society's healthcare economics.

### Examples

Hereinafter, the present invention is described in more detail and specifically with reference to the Examples, which however are not intended to limit the present invention.

### Example 1: General Methods

Patients and liver samples. All patients provided written informed consent according to the Helsinki declaration of 1995, and the study protocol conformed to the guidelines of the ethics committee of the University Hospital Essen. Non-cirrhotic liver tissue (NC, n=9) was obtained from liver portions that had been partially resected due to different entities of liver-metastasized neoplasms (Tab. 1), with an ample circumference of surrounding healthy tissue.

**Table 1. General characteristics of patients and liver samples.**

| **Number** | **Surgical intervention** | **Underlying disease** | **Gender/ Age** | **Sample weight [g]** |
|---|---|---|---|---|
| NC-1 | Right side hemihepatectomy | Klatskin tumor | f / 61 | 55 |
| NC-2 | Left side hemihepatectomy | Hemangioma | f / 38 | 18 |
| NC-3 | Right side hemihepatectomy | Klatskin tumor | f / 60 | 70 |
| NC-4 | Left side partial resection | Metastasized colon carcinoma | f / 75 | 19 |
| NC-5 | Right side hemihepatectomy | Metastasized colon carcinoma | m / 43 | 45 |
| NC-6 | Right side hemihepatectomy | Metastasized rectal carcinoma | m / 52 | 55 |
| NC-7 | Right side hemihepatectomy | Metastasized soft palate carcinoma | m / 55 | 54 |
| NC-8 | Explantation | hepatocellular carcinoma | f / 59 | 56 |
| NC-9 | Right side hemihepatectomy | Cholangiocellular carcinoma | m / 70 | 55 |
| CL-1 | Explantation | Hepatitis C | f / 61 | 40 |
| CL-2 | Explantation | Hepatitis C | m / 50 | 25 |
| CL-3 | Explantation | Hepatitis C | m / 51 | 48 |
| CL-4 | Explantation | Ethanol toxicity | m / 48 | 42 |
| CL-5 | Explantation | Hepatitis C | m / 61 | 55 |
| CL-6 | Explantation | Hepatitis C | m / 66 | 55 |
| CL-7 | Explantation | Primary biliary cirrhosis | f / 51 | 32 |
| CL-8 | Explantation | Hepatitis C | m / 61 | 38 |

While the diseased tissue was forwarded to the pathologist, adjacent unaffected tissue was transferred to the laboratory, stripped of any remnants of macroscopically visible pathologic areas, and then connected to the perfusion system (see below). Cirrhotic liver tissue (CL, n=8) was mostly derived from the left lobe of whole liver explants in the course of complete orthotopic liver transplantation in patients with hepatitis C, primary bilary cirrhosis or ethanol toxicity.

Liver perfusion system. The perfusion system was designed as a closed circuit providing a constant flow rate, being supplied with nutrients and oxygen, to liver samples of 20-50 g (for a schematic drawing, see Figure 1). A pump drive with two peristaltic heads (Masterflex via Novodirect, Kehl, Germany) was used for the bidirectional transport of the perfusion medium. Medium was oxygenated by a commercially available aquarium pump (Hagen, Holm, Germany) and routed through a custom-built glass heating coil flowed with water kept at 40°C *via* an external heating outlet (Julabo, Seelbach, Germany). The fluid's pressure was measured manometrically (VBM Medizintechnik, Sulz, Germany) and ranged from 40 to 100 mm Hg. Before entering the liver sample, the perfusion fluid was degassed by means of a bubble trap (Stem Cell Systems, Berlin, Germany). A three-way valve was installed thereafter for collecting perfusion medium before passing the liver sample. The specimen was connected via four branches of the circuit tubing, ending in venous catheters, and the perfusate efflux was collected in a bowl and re-conveyed to the medium reservoir. This connection was furnished with another three-way valve for sampling after liver passage, and for applying any agents. Liver specimens were maintained at 37°C in a water bath.

Experimental perfusion. First, the liver piece was connected to the perfusion circuit via 2-4 cannulas - dependent on available vessels - adhered into portal or central veins by the tissue adhesive, Histoacryl (Braun, Melsungen, Germany). Second, the surgical cutting area was sealed with Histoacryl. The liver piece was then rinsed with approx. 500 mL of Hank's balanced salt solution (HBSS; PAA, Cölbe, Germany) supplemented with 20 mM 4-(2-hydroxyethyl)-1-piperazineethanesulfonic acid (HEPES; PAA) and 2 U/mL heparin (Ratiopharm, Ulm, Germany) for removing residual blood, whereupon exchanging the perfusion medium to 250 mL Williams' medium E (Biochrom, Berlin, Germany) containing 20 mM HEPES. The first 50 mL volume of the perfusate was discarded for removing as much residual blood as possible and to allow for a consistent zero point. The circuit was closed by placing the effluent tubing into the medium reservoir (Figure 1). Time measurement started after few initial samplings; flow rates were adjusted to obtain an appropriate pressure of about 50 mmHg (i.e., 40 or 50 mL/min). The perfusion was run for 6 h, and perfusate samples were collected hourly. For determination of CYP activity, additional samples were taken at 0.25 and 0.5 h. Glucose and lactate concentrations as well as pH and pO2 (general metabolism) were measured instantly on the blood gas analyzer ABL715 (Radiometer, Willich, Germany), and the pH was adjusted to 7.3-7.4 by adding 1-2 mL of 8.4% sodium bicarbonate solution (Braun) to the perfusate as needed. When small (< 20 g) pieces of liver were employed, the initial pH turned alkaline; in these cases 2-3 mM of sodium dihydrogen phosphate (Sigma-Aldrich, Munich, Germany) were added. In case the glucose concentration decreased below 40 mg/dL, the perfusate was supplemented with 0.75-1.0 mL of a 40% glucose solution (Braun, Melsungen, Germany) corresponding to 150-200 mg/dL glucose. At termination of the experiment, 2 mL of trypan blue (Sigma-Aldrich) were added and perfused for 10 min to allow for evaluation of perfusion efficiency and identification of the perfused tissue areas. Liver specimens were finally cut into 1-cm slices, and areas of interest were either stored in 4% paraformaldehyde for paraffin embedding or frozen in liquid nitrogen prior to preparing cryosections.

Biochemical parameters and cell death markers. For determining biochemical parameters, perfusate samples were stored at 4°C overnight and then transferred to the Dept. of Clinical Chemistry and Laboratory Medicine (University Hospital Essen). Activities of ALT, AST, γGT, GLDH, and LDH were determined on the ADVIA 1800 Chemistry System (Siemens Healthcare Diagnostics, Eschborn, Germany) using the respective assay cassettes. Human albumin was quantified with the AssayPro Human Albumin ELISA kit (St. Charles, MO, USA). For comparability, measurements were normalized to the per-gram weight of the different liver specimens. Glucose turnover was calculated by subtracting the glucose content of the culture medium from the perfusate concentration. Positive values were defined as production or release of a compound while negative values were assumed to reflect consumption-except for oxygen, whose consumption was calculated by determining the partial pressure deviation in the perfusate before entering and after exiting the liver specimen (in mm Hg), multiplied by the flow rate (in dL/min) and the Henry constant (0.3 mL x dL⁻¹ x mm Hg⁻¹). The overall cell death and apoptosis rates were determined by means of the M65 and M30 ELISA kits (Peviva, Bromma, Sweden) according to the manufacturer's instruction.

Histochemistry and TUNEL assay. Paraffin-embedded tissue sections were deparaffinized and rehydrated, followed by antigen retrieval with 10 mM sodium citrate buffer (pH 6.0) containing 0.05% Tween 20 for 10 min at 80°C. The TUNEL index (in %) was calculated as TUNEL-positive cells per total cell number within one high-power field at x20 magnification. Counterstaining for TUNEL was performed with DAPI.

Acitivity of cytochrome P450 (CYP). The CYP activity was assessed by adding a CYP substrate cocktail consisting of phenacetin (CYP1A1/2), midazolam (CYP3A4) and diclofenac (CYP2C9) to the medium reservoir directly before starting the time measurement of the respective experiment. Phenacetin and diclofenac (both from Sigma-Aldrich) were prepared as stock solutions of 80 and or 40 mmol/L, respectively, in dimethyl sulfoxide (DMSO), and were diluted in culture medium to final concentrations of 26 μM or 9 μM, respectively, in the perfusion circuit. Midazolam was provided as an aqueous solution (Dormicum^{®}, Roche Pharma, Grenzach-Wyhlen, Germany) at 13.8 mM (= 5 mg/mL) and diluted to a perfusion concentration of 3 μM. Samples of 200 μl were taken from below the bubble trap at the indicated time points in the experimental procedure and stored at -20°C until further processing. The metabolites paracetamol, 1'-hydroxymidazolam and 4'-hydroxydiclofenac were analyzed by liquid chromatography/mass spectrometry. The liquid chromatography system consisted of a HTS PAL injector (CTC Analytics, Zwingen, Switzerland) combined with an HP 1100 LC binary pump and column oven (Agilent Technologies Deutschland, Waldbronn, Germany). The separation was performed on a reversed-phase HyPurity C18 analytical column (50×2.1 mm, 5 μm; Thermo Scientific, Runcorn, UK) with a HyPurity C18 precolumn at 40°C and with a flow rate of 750 μL/min. The mobile phases consisted of 0.1 % (v/v) formic acid in 5% acetonitrile (A) and 0.1 % (v/v) formic acid in 95% acetonitrile (B). Detection was performed with a triple quadrupole mass spectrometer (API4000), equipped with an electrospray interface (Applied Biosystems/MDS Sciex, Concorde, Canada). Instrument control, data acquisition and data evaluation were performed using Applied Biosystems/MDS Sciex Analyst 1.4 software.

Statistical analyses. Measured values, areas under-the-curves (AUCs), Pearson correlations and two-way ANOVA statistical analyses were calculated and graphically displayed by GraphPad Prism 5 (GraphPad Software, La Jolla, CA, USA). Statistical significance was assumed at *p* ≤ 0.05. Grubbs test was performed in Excel 2007 (Microsoft Corp., USA)

### Example 2. General patients' characteristics in NC and CL.

NC liver specimens were obtained from resections on 55.6% female and 44.4% male patients (mean age: 57:0 ± 11.8 yrs.). Liver explants of CL were derived from 75% male and 25% female patients (mean age: 56.1 ± 6.8 y [n.s.]). The underlying diseases varied strongly between the groups (c.f. Tab. 1).

### Example 3. General metabolic characteristics in NC and CL specimens.

Time courses of glucose metabolism (production vs. consumption), lactate production and oxygen consumption were recorded (**Figure 2**). NC tissues provided a rather stable amount of glucose throughout the perfusion process presenting a flat course of the values with a maximum of 1.28 ± 0.49 mg x dL⁻¹ x g⁻¹ at 2 h (**Figure 2A**). While some CL liver specimens showed a positive glucose balance for a 6-h period, several CL tissues switched to glucose consumption within 1-4 h revealing negative mean values with a minimum of -2.2 ± 2.6 mg x dL⁻¹ x g⁻¹ at 6 h (**Figure 2A**). Although lactate production increased linearly in both groups, the slope in CL was steeper when compared to NC and differed significantly (p=0.0004, **Figure 2B**). Maximal values measured after 6 h were 0.36 ± 0.04 mmol x L⁻¹ x g⁻¹ for NC vs. 0.83 ± 0.1 mmol x L⁻¹ x g⁻¹ for CL tissue. Furthermore, the slope of the lactate curves differed significantly (p<0.0001, **Tab. 2**) indicating a stronger production rate in CL tissue.

**Table 2.: Calculation of slope values from non-cirrhotic (NC) and cirrhotic (CL) liver samples. A slope was indicated when at least one r value of the Pearson correlation analysis was >0.9 (not shown) although the correlation in the related graph did not appear linear. The difference of the slopes is given as the P value.**

| **Parameter** | **Slope (average production/h)** | | | **Difference of slopes** |
|---|---|---|---|---|
| | **NC** | **CL** | **units** | ***P*** |
| **Glucose** | | | | |
| **Lactate** | 0.0518 | 0.132 | mmol/Ug/h | < 0.0001 |
| **Oxygen** | | | | |
| **Urea** | 0.0226 | 0.0165 | mg/dUg/h | 0.116 |
| **Albumin** | 0.3891 | 0.7223 | μg/mL/h | 0.0067 |
| **Bile acids** | 0.014 | 0.0153 | μmol/L/g/h | 0.7979 |
| **LDH** | 24.22 | 5.372 | U/L/g/h | < 0.0001 |
| **GLDH** | 3.19 | 0.379 | U/L/g/h | < 0.0001 |
| **AST** | 18.23 | 6.316 | U/L/g/h | 0.0003 |
| **ALT** | 13.16 | 1.563 | U/L/g/h | < 0.0001 |
| **γGT** | 0.0976 | 0.0215 | U/L/g/h | 0.004 |

Oxygen consumption did not differ between the groups and remained largely constant throughout the observation period, with a maximum of 1.66 ± 0.36 μL x min⁻¹ x g⁻¹ at 4 h for NC tissue **(****Figure 2C****).**

### Example 4. Urea, albumin and bile acids in NC and CL specimens.

Similar time courses for urea increased slightly in both NC and CL tissues over time **(****Figure 3A****);** the maximal values at 6 h were 0.16 ± 0.03 mg x dL⁻¹ x g⁻¹ for NC and 0.13 ± 0.02 mg x dL⁻¹ x g⁻¹ for CL tissue. The production of albumin was strongly elevated in NC tissues concomitant with a steeper slope of the time course **(****Figure 3B****).** For NC, the albumin values reached a maximum of 3.5 ± 0.6 μg x mL⁻¹ x g⁻¹ at 6 h while CL tissue exhibited a rather flat course with a maximum of 1.7 ± 0.5 μg x mL⁻¹ x g⁻¹ at 5 h of perfusion. The secretion of bile acids increased during the perfusion time, although the concentration in the CL group was already elevated at the experimental onset and remained significantly elevated at all times (p=0.0047) when compared to NC (**Figure 3C**). Maxima at the end of perfusion were 0.11 ± 0.02 μmol x L⁻¹ x g⁻¹ for NC and 0.19 ± 0.03 μmol x L⁻¹ x g⁻¹ for CL, respectively.

### Example 5. Liver enzymes in NC and CL specimens.

In order to assess the maintenance of liver cell integrity during perfusion, established clinical markers of liver damage derived from different hepatocytic compartments were determined in the perfusate (**Figure 4**). In CL tissues, slight increases in the activities of all liver enzymes tested for were observed over the perfusion time. At 6 h, maximal values in CL were obtained for aspartate aminotransferase (AST) (44.7 ± 8.9 U x L⁻¹ x g⁻¹), alanine aminotransferase (ALT) (12.5 ± 5.1 U x L⁻¹ x g⁻¹), lactate dehydrogenase (LDH) (38.2 ± 5.6 U x L⁻¹ x g⁻¹), glutamate dehydrogenase (GLDH) (2.5 ± 0.6 U x L⁻¹ x g⁻¹) and γ-glutamyltransferase (γGT) (0.21 ± 0.04 U x L⁻¹ x g⁻¹). In contrast, beginning at 2-3 h after the onset of perfusion, NC livers exhibited a stronger increase in these parameters, leading to significant differences for ALT, LDH, GLDH and γGT between the groups. At the end of perfusion, the highest values were measured for AST (117 ± 29 U x L⁻¹ x g⁻¹), ALT (80.5 ± 23.6 U x L⁻¹ x g⁻¹), LDH (152 ± 34 U x L⁻¹ x g⁻¹) and GLDH (23.0 ± 6.7 U x L⁻¹ x g⁻¹). In NC specimens, the release of γGT had a plateau at around 4-5 h of perfusion and slightly dropped during the last hour. Thus, the maximal γGT value (6.4 ± 0.18 U x L⁻¹ x g⁻¹) was found after 5-h perfusion.

### Example 6. Apoptosis and necrosis in NC and CL specimens.

As a consequence of cell death, intracellular proteins like cytokeratin 18 are released into the extracellular matrix. Only during apoptosis a neoepitope of CK18 - M30 - is generated by caspase cleavage. In the perfusate, the M65 ELISA thus detects the total amount of cell death while the M30 ELISA specifically accounts for apoptosis (**Figure 5**). M65 mean values ranged from 739 ± 251 U x L⁻¹ x g⁻¹ in NC liver tissue after 1 h to 1482 ± 527 U x L⁻¹ x g⁻¹ after 6 h of perfusion (**Figure 5A**). Mean values for CL tissue started with 632 ± 154 U x L⁻¹ x g⁻¹ after 1 h and after 3 h had a plateau with a maximum of 985 ± 202 U x L⁻¹ x g⁻¹. The courses of the M30 means nearly paralleled one another for NC and CL and rose from 15 U x L⁻¹ x g⁻¹ (1 h) to 36.7 ± 16.4 and 43.7 ± 10.5 U x L⁻¹ x g⁻¹ (6 h), respectively (**Figure 5B**). While the courses of M65 or M30 did not differ significantly, the M30/M65 ratio was significantly higher in the CL specimens (p=0.0056, **Figure 5C**). While this ratio remained fairly stable at 2% for NC throughout perfusion, it increased for CL from around 3.5% (1 h) to almost 6% (6 h).

### Example 7. Cytochrome P450 enzymes in NC and CL specimens.

As a more detailed measure of hepatic function, the inventors investigated phase-I conversions of three model cytochrome P450 substrates. In the initial 30-min interval, OH-midazolam and OH-diclofenac were formed quite rapidly, but dropped continuously thereafter (CYP3A4, **Figure 6B****/E**; CYP2C9, **Figure 6C****/F**) due to formation the of phase-II products. The glucuronides of OH-midazolam and OH-diclofenac were identified by qualitative Q-TOF analysis. The phase-I metabolite of phenacetin was built within the first 2 h and then plateaued (CYP1A1/1A2, **Figure 6A****/D**). As a result of overlapping phase-I and phase-II reactions, the courses of NC and CL tissue intersected once the phase-I reactions were completed in NC. To quantify the extent of both reactions for NC and CL, the areas under the curves (AUCs) were calculated before and after this intersection (**Figure 6G-J**). In CL tissue, phase-I products of all three CYP substrates were generated at a much slower rate than in NC tissue, leading to deviations in the AUCs from -24.2 to -69.3% (**Figure 6G-J****, early**). Additionally, the protracted presence of phase-I products for CL tissue - with higher AUCs of 53.8 % and 26.9 % for CYP3A4 and CYP2C9, respectively (**Figure 6H****/J, late**) - also suggests a much slower formation of phase-II products in CL. None of the observed differences for CYP activities in NC and CL tissue reached statistical significance.

## Claims

1. An organ perfusion system (1), said system (1) comprising:
(a) a bowl (10) for supporting an explant,
(b) a vessel (11) for storing the perfusion medium reservoir;
(c) a drive means (12) for the bidirectional transport of the perfusion medium;
(d) a sensing means for measuring and controlling the oxygen concentration (13) in said perfusion medium;
(e) a sampling means for collecting the perfusion medium and for applying nutrients (14);
**characterized in that** said bowl (10), said vessel (11), said drive means (12), said sensing means (13) and said sampling means (14) are integrated in a closed circuit via circuit tubing for the provision of a constant flow rate, being supplied with nutrients and oxygen, to said explants for at least six hours.

2. The organ perfusion system (1) of claim 1, said system (1) further comprising sensing means for measuring and controlling the pressure (15) in said perfusion medium and/or sensing means for measuring and controlling the temperature (16) of said perfusion medium and/or degassing means (17) for removing air bubbles that interfere with said system (1).

3. The organ perfusion system of claim 1 or 2, wherein said organ explant is derived from human liver, heart, lung, small intestine or kidney.

4. The organ perfusion system (1) of claim 3, wherein said organ explant is selected from the group consisting of liver specimens, liver segments, split liver transplants and whole-organ liver transplants derived from patients or healthy organ donors.

5. The organ perfusion system (1) of any of claims 1-4, wherein said bowl (10) comprises a water bath maintaining the temperature between 33°C and 42°C, more preferably between 35.8°C and 37.2°C, most preferably at 37°C.

6. The organ perfusion system (1) of any of claims 1-5, wherein said explant in said bowl (10) is connected via at least four branches of the circuit tubing ending in venous catheters, wherein the perfusion medium efflux is collected in said bowl (10) and re-conveyed to the vessel (11).

7. The organ perfusion system (1) of any of claims 1-6, wherein said drive means (12) comprise at least two peristaltic pump heads (121, 122).

8. The organ perfusion system (1) of any of claims 1-7, wherein said sensing means (13) comprise an airstone (131) and measure the oxygen concentration of said perfusion medium before said medium is introduced into said organ explant.

9. The organ perfusion system (1) of any of claims 1-8, wherein said sampling means (14) are three-way valves, which are installed before (141) and after (142) said perfusion medium passing said explants, wherein said sampling means (141) are installed for collecting said perfusion medium before passing said explant and said sampling means (142) are installed for collecting and for applying nutrients to the perfusion medium after passing said human liver explant.

10. The organ perfusion system (1) of any of claims 2-9, wherein said sensing means (15) measure the pressure of said perfusion medium during degassing said perfusion medium, wherein said pressure ranges from 40 to 100 mm Hg.

11. The organ perfusion system (1) of any of claims 2-10, wherein said sensing means (16) measure the temperature of said perfusion medium before said medium is introduced into said degassing means (17), which remove air bubbles before said medium is introduced into said explant, wherein said sensing means (16) are a glass heating coil flushed with water and keep the temperature of said perfusion medium between 33 and 42°C, preferably between 35.8 and 40°C, most preferably at 40°C.

12. A method of preserving human or animal explants by applying said organ perfusion system (1) according to any claims 1-11.

13. A method of therapeutically oriented research or basic research on human or animal liver explants derived from patients, healthy organ donors, or animal sources by applying said organ perfusion system (1) according to any claims 1-11.

14. A method of identifying characteristic differences between human or animal liver explants derived from patients, healthy organ donors, or animal sources by applying said *ex-vivo* organ perfusion system (1) according to any claims 1-10.
